# EUROPEAN PATENT APPLICATION

(11) **EP 2 995 711 A1**
(43) Date of publication of application: **16.03.2016**
(21) Application number: 15168170.7
(22) Date of filing: 19.05.2015
(51) Int. Cl.: D06F 39/08, B01D 29/56

(54) **WATER WALVE FOR A WASHING MACHINE AND METHOD OF MANUFACTURING THE SAME**

(30) Priority: 12.09.2014 KR 20140120988
(71) Applicant: Dongbu Daewoo Electronics Corporation, Seoul 135-523 (KR)
(72) Inventor: LEE, Sung Myun, 135-523 Seoul (KR)
(74) Representative: Rau, Schneck & Hübner Patentanwälte Rechtsanwälte PartGmbB

(57) **Abstract**

A water valve (10) for a washing machine includes a valve head (11); a first filter unit (100) detachably installed in the valve head (11) and operable for filtering foreign material contained in feed water in the washing machine; and a second filter unit (200) disposed at the rear side of the first filter unit (100).

## Description

### Related Application

This application is based on and claims priority to Korean Patent Application No. 10-2014-0120988, filed on September 12, 2014, the disclosure of which is incorporated herein in its entirety by reference.

### Field

Embodiments according to the present invention relate to a water valve for a washing machine that can filter foreign material contained in water, and a method of manufacturing the same.

### Background

In general, a washing machine is a device that removes various contaminants from laundry including clothes, bedding, and the like using the emulsion actions of detergents, the frictional actions of water caused by movement of a pulsator, and the actions of impacts applied to the laundry by the pulsator. In recent years, washing machines that automatically carry out a series of operations, from the start of washing through washing, rinsing, and dehydrating (e.g., spin drying), without any intervention by an operator, are widely used.

A washing machine may include a main body having a bottom and lateral sides and a top cover provided on the upper side of the main body. The main body may be provided with a reservoir therein in which a washing tub may be rotatably installed to accommodate, wash, and dehydrate the laundry. The washing tub may be provided with a pulsator.

A detergent container housing into which a detergent container may be detachably inserted, a water hose connected to the detergent container housing, and a water valve connected to the water hose may be installed at the rear side of the top cover.

A valve head at a water supply side of the water valve may be installed with a filter, to filter foreign material that might be contained in the water supplied to the washing machine.

In conventional washing machines, a single filter is installed in the valve head of the water valve to filter any foreign material contained in the water. However, when a single filter is used, foreign material is often not completely filtered from the supply water. This may cause the washing machine to stop functioning properly, especially when the filter is damaged or worn out and as a result is not satisfactorily performing its function.

Moreover, when a user separates parts of the filter to clean it and does not reassemble the filter properly or completely, foreign material contained in the feed water can enter the washing machine, which may cause a serious problem.

### Summary

In view of the above, embodiments according to the present invention provide a filter for a water valve for a washing machine including at least two filters to effectively filter foreign material in the feed water in the washing machine, even if one of the two filters is damaged, and a method of manufacturing such a filter and water valve.

Embodiments according to the present invention also provide a filter for a water valve for a washing machine including two filters with different structures and materials that together effectively filter foreign material and that complement each other, and a method of manufacturing such a filter and water valve.

According to an aspect of the present disclosure, a water valve for a washing machine includes: a valve head; a first filter unit operable for filtering foreign material in feed water in the washing machine; and a second filter unit disposed at the rear side of the first filter unit relative to the direction of incoming feed water.

In an embodiment, the first filter unit includes: a housing having a size that allows it to be inserted into the valve head; and a first mesh unit installed in the hollow interior portion of the housing and having a central portion protruding toward the direction of the incoming feed water.

The first filter unit may further include a grip on the outside of the first mesh unit and having both ends connected to the housing.

In an embodiment, the second filter unit includes: a flange unit having a size that allows it to be inserted into the valve head and held in place by an end of the housing; and a second mesh unit disposed in the hollow interior portion of the housing and operable for filtering foreign material in the feed water that has passed through the first mesh unit, and extending from the flange unit and protruding toward the first mesh unit, without interfering with the first mesh unit.

The water valve may further include at least two supports spaced apart from each other on the outer circumference of the second mesh unit and connected to the flange unit.

The first mesh unit and the second mesh unit may have meshes of different sizes to filter foreign materials. In an embodiment, one of the mesh units is made of metal and the other is made of synthetic resin.

The first mesh unit may be a product that is separate from the housing, and the second mesh unit is molded and integrated with the flange unit.

According to another aspect of the present invention, a method of manufacturing a water valve for a washing machine includes: manufacturing a first filter unit that is operable for filtering foreign material contained in feed water in the washing machine; manufacturing a second filter unit that is operable for filtering foreign material that passes through the first filter unit; providing a body of the water valve having a valve head; and installing the first filter unit and the second filter unit in the valve head such that the first filter unit is positioned in front of the second filter unit relative to the direction of incoming feed water.

In an embodiment, manufacturing the first filter unit includes: forming a housing in a size that allows the housing to be inserted into the valve head; forming a first mesh unit that protrudes toward the direction of the incoming feed water; and installing the first mesh unit in the hollow interior portion of the housing.

In an embodiment, manufacturing the second filter unit includes: integrally molding the flange unit such that it can be inserted into the valve head and held in place by an end of the housing with the second mesh unit protruding toward the front side of the flange unit (toward the first filter unit).

The method of manufacturing a water valve for a washing machine may further include: forming at least two supports on the outer circumference of the second mesh unit and connected to the flange unit.

In an embodiment, the first mesh unit and the second mesh unit have meshes of different sizes to filter foreign materials. In an embodiment, one of the mesh units is made of metal and the other is made of synthetic resin.

In embodiments according to the present invention, at least two filters are installed on a water valve for a washing machine to effectively filter foreign material contained in feed water in the washing machine and to filter foreign material even if any one of the two filters is, for example, damaged.

Moreover, the two filters can have different structures and materials to effectively share filtering of foreign material and to complement each other.

### Brief Description of the Drawings

The above and other objects and features of the present invention will become apparent from the following description of the embodiments provided in conjunction with the accompanying drawings, in which:
FIG. 1 is an exploded perspective view illustrating a water valve for a washing machine in an embodiment according to the present invention;
FIG. 2 is a cross-sectional view illustrating a water valve for a washing machine in an embodiment according to the present invention;
FIG. 3 is a cross-sectional view illustrating installation of a water valve for a washing machine in an embodiment according to the present invention; and
FIG. 4 is a flowchart of a method of manufacturing a water valve for a washing machine in an embodiment according to the present invention.

### Detailed Description

Reference will now be made in detail to the various embodiments of the present disclosure, examples of which are illustrated in the accompanying drawings. While described in conjunction with these embodiments, it will be understood that they are not intended to limit the disclosure to these embodiments. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

The detailed description of the invention will be provided for the purpose of explaining the principles of the invention and its practical application, thereby enabling others skilled in the art to understand the invention for various embodiments and with various modifications as are suited to the particular use contemplated. The detailed description is not intended to be exhaustive or to limit the invention to the precise embodiments disclosed. Modifications and equivalents will be apparent to practitioners skilled in this art and are encompassed within the spirit and scope of the appended claims.

The terms used in the following description are not intended to limit the present invention, but are merely used to describe example embodiment(s) according to the invention. It is to be understood that the singular forms of words include plural referents unless the context clearly dictates otherwise.

Hereinafter, a water valve in an embodiment according to the present invention will be described with reference to the accompanying drawings.

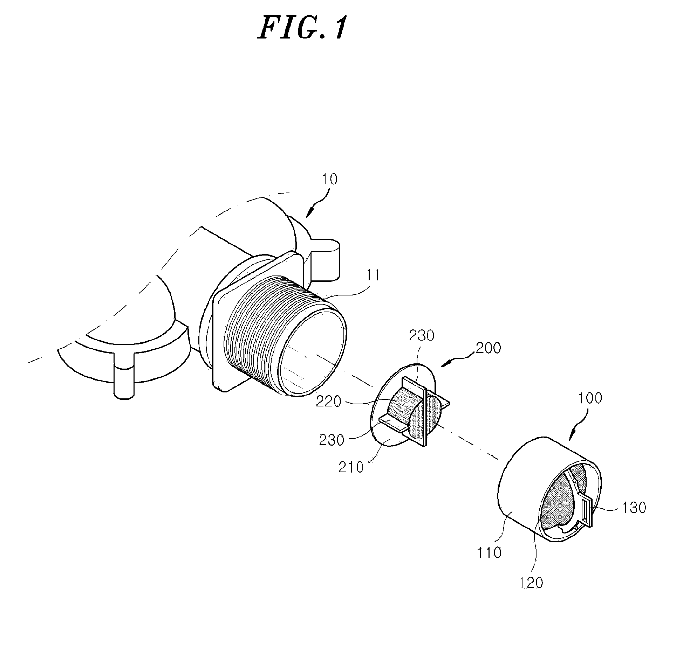

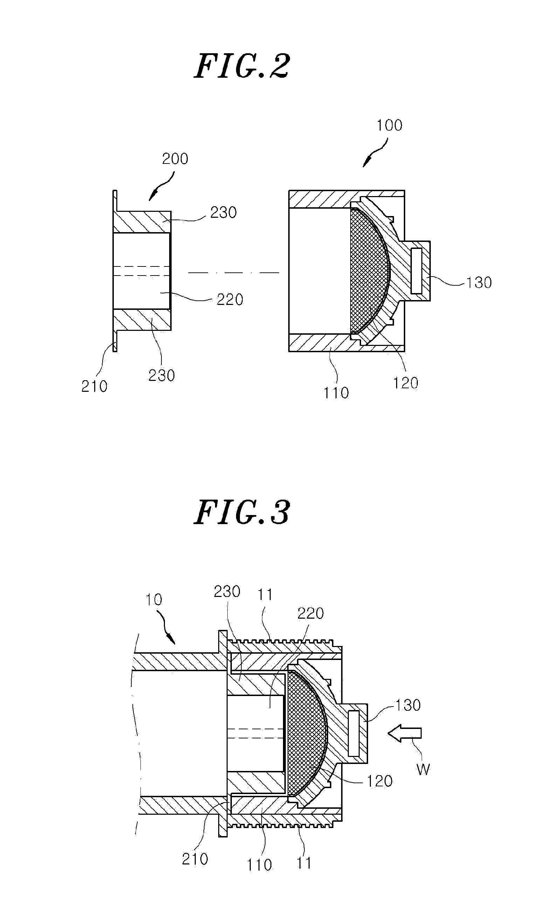

FIG. 1 is an exploded perspective view illustrating a water valve for a washing machine in an embodiment according to the present invention; FIG. 2 is a cross-sectional view illustrating a water valve for a washing machine in an embodiment according to the present invention; and FIG. 3 is a cross-sectional view illustrating installation of a water valve for a washing machine in an embodiment according to the present invention.

With reference to FIGs. 1 to 3, a water valve 10 in an embodiment according to the present invention includes a valve head 11, a first filter unit 100, and a second filter unit 200.

The water valve 10 does not necessarily include only the elements described herein, but may include those elements and other well-known elements. However, their descriptions will be omitted to avoid obscuring aspects of the present invention.

Embodiments according to the present invention relate to a water valve 10 disposed on a water supply path of a washing machine, and more particularly a water valve in which the valve head 11 is provided at a water supply side of the water valve 10 such that filtered water (hereinafter, referred to as "feed water") can be supplied into the washing machine.

The first filter unit 100 may be detachably installed to the valve head 11 to filter foreign material contained in the feed water of the washing machine.

The first filter unit 100 may have a size (e.g., outer diameter) corresponding to an inner surface (e.g., the inner diameter) of the valve head 11 so that it can be suitably inserted into the valve head 11. The first filter 100 may be coupled to the valve head 11 using a separate coupling device, or it may be installed and held in place by elastic (e.g., compressive) or frictional force, for example.

Specifically, the first filter 100 may include a housing 110, a first mesh unit 120, and a grip or handle 130.

The housing 110 may have a size (e.g., outer diameter) that allows it to be inserted into the inner surface of the valve head 11. The housing 110 may have a hollow interior portion such that the first mesh unit 120 may be installed inside of the housing 110.

The housing 110 may have a shape that corresponds to the shape of the inner surface of the valve head 11. For example, if the inner surface is circular, then the housing 110 may be cylindrical in shape. The housing 110 can be made of synthetic resin that is easily formed and is elastic.

In addition, the first mesh unit 120 may be installed in the hollow portion of the housing 110 to filter foreign material contained in the feed water. The first mesh unit 120 may be shaped like a plate or a relatively shallow bowl. In the latter embodiment, the first mesh unit 120 has an arc-like shape that protrudes toward the incoming direction W of the feed water (see FIG. 3).

In an embodiment in which the first mesh unit 120 (FIG. 1) is shaped like a plate, the structure and installation of the first mesh unit 120 are simple but may be deformed by hydraulic pressure. Thus, in order to increase stiffness and resistance to hydraulic pressure by increasing the surface area of the first mesh unit 120 within the diameter of the housing 110, it may be advantageous for the first mesh unit 120 to have the above-described arc-shaped (bowl-like) structure.

In addition, the first filter 100 may further include a grip 130 allowing the first filter unit 100 to be easily grabbed and separated from the valve head 11 after its installation in the valve head 11. The grip 130 may extend over the outer side of the mesh unit 120 (away from the side facing the valve head 11) and be connected to the housing 110 at both of its ends.

The grip 130 protrudes outside the housing 110 such that a user may grasp the grip 130 easily. A user may pull the grip 130 and easily remove the first filter unit 100 from the valve head 11.

Meanwhile, the second filter unit 200 may be disposed at the rear side the first filter unit 100 in the valve head 11. The second filter unit 200 can filter foreign material contained in water that has passed through the first filter 100 to feed even fresher feed water into the washing machine.

Thus, even if the first filter unit 100 is damaged or its filtering function is abnormal due to wear, the second filter unit 200 filters foreign material so that fresh feed water can be fed into the washing machine.

Moreover, since the second filter unit 200 may be manufactured as a part that is independent from the first filter unit 100 and as such can be separately installed in the valve head 11 without coupling with the first filter unit 100, foreign material in the feed water fed into the washing machine can be filtered even if a user forgets to reinstall one of the filter units after the filters are separated for cleaning or if one of the filter units is lost.

Specifically, the second filter unit 200 may include a flange unit 210 and a second mesh unit 220.

The flange unit 210 may be smaller than or equal to the inner diameter of the valve head 11, and can be inserted into the valve head 11 such that the second filter unit 200 can be installed in the valve head 11. In this case, the size of the flange unit 210 is determined such that the flange unit 210 is firmly held in place by the housing 110. When the flange unit 210 is held in place by the housing 110, the second filter unit 200 may not be fully inserted in the first filter unit 100, but instead is partially inserted in such a way that the flange unit 210 is firmly held in place within the valve head against the water valve 10. Thus, the second filter unit 200 may be installed in the valve head 11 in such a way that the second filter unit 200 is partially inserted into the first filter unit 100 (see FIG. 3).

The second mesh unit 220 is disposed inside the hollow interior portion of the housing 110 to filter foreign material in the feed water that has passed through the first mesh unit 120. The second mesh unit 220 extends from the flange unit 210 and protrudes toward the first mesh unit 120, but may be spaced apart from the first mesh unit 120 so that it does not interfere with the first mesh unit 120.

In an embodiment, the second mesh unit 220 has two more supports 230 formed on its outer circumference, spaced apart from each other at a regular distance in the circumferential direction, and connected to the flange unit 210.

The supports 230 reinforce the strength of the second mesh unit 220 that protrudes from the flange unit 210, and help support the second mesh unit 220 by connecting the side of the second mesh unit 220 to the flange unit 210.

There can be two or more supports 230. In an embodiment, four supports 230 are arranged at intervals of 90 degrees; however, the number of the supports is not so limited.

The first mesh unit 120 and the second mesh unit 220 may have different mesh sizes to filter different sizes of foreign materials. Thus, foreign materials may be filtered by the first mesh unit 120 and/or the second mesh unit 220 according to their size.

The first and second mesh units 210 and 220 may be made of the same material or they may be made of different materials. The first mesh unit 120 and/or the second mesh unit 220 may be made of metal or of synthetic resin. In an embodiment, the first mesh unit 120 is made of metal and the second mesh unit 220 is made of synthetic resin. However, the mesh is not limited to these materials.

In an embodiment where the first mesh unit 120 is made of metal, the metal may be iron, aluminum, or some other metal. If metal is used, the first mesh unit 120 will have excellent stiffness and strength but less elasticity, and may corrode if it is in contact with water for a long time.

In an embodiment where the second mesh unit 220 is made of synthetic resin, it will have slightly less strength and stiffness but will have excellent elasticity and corrosion resistance. If the first mesh unit 120 and the second mesh unit 220 are made of different materials, then foreign material contained in the feed water may be filtered by either or both of the mesh units 120 and 220, and any drawbacks of one mesh unit will be compensated by the other, and one of the mesh units can filter the feed water if the other one of the mesh units 120 and 220 is damaged or worn out.

In an embodiment where the first mesh unit 120 is made of metal, the first mesh unit 120 may be made as a product that can be separated from the housing 110. Thus, if the first mesh unit 120 is corroded or damaged, it can be readily replaced with a new one.

In an embodiment where the second mesh unit 220 is made of synthetic resin, the second mesh unit 220 may be molded and integrated with the flange unit 210.

Hereinafter, an embodiment of a method of manufacturing a water valve for a washing machine will be described. Since the manufacturing method is supported by the above description of the water valve for a washing machine, duplicated description will be omitted and only features peculiar to this embodiment will be described.

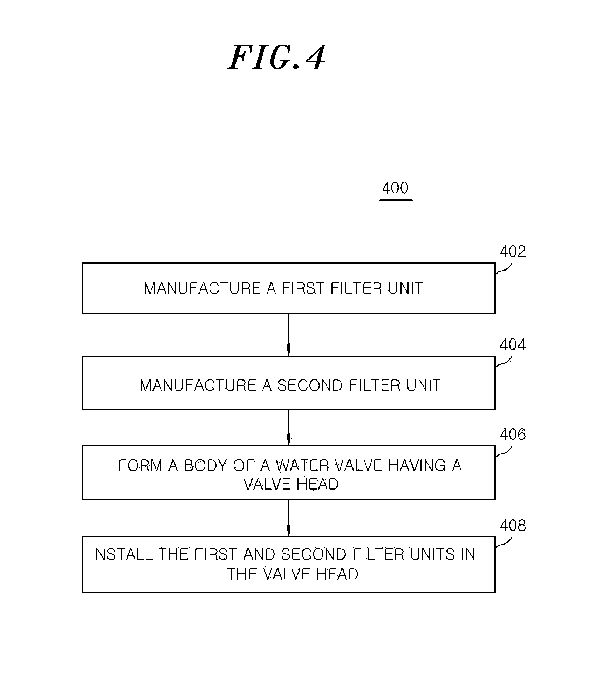

With reference to FIG. 4, an embodiment of a method 400 of manufacturing a water valve for a washing machine includes manufacturing a first filter unit 100 that can be used to filter foreign material contained in the feed water (402), manufacturing a second filter unit 200 that can filter foreign material that passed through the first filter unit 100 (404), providing a body of the water valve 10 having the valve head 11 (406), and installing the first filter unit 100 and the second filter unit 200 in the valve head 11 such that the first filter unit 100 is positioned in front of the second filter 200 (408) toward the direction of the incoming feed water.

The first filter unit 100 may be manufactured by forming the housing 110, forming the first mesh unit 120, and installing the first mesh unit 120 in the hollow interior portion of the housing 110.

The housing 110 may be formed in a size that allows it to be inserted into the valve head 11, and may have a hollow interior.

The first mesh unit 120 may be formed such that its central portion protrudes toward the direction of the incoming feed water.

The second filter unit 200 may be manufactured by integrally molding the flange unit 210, which is formed in a size that allows it to be inserted into the valve head 11 and held in place by an end of the housing 110, with the second mesh unit 220 protruding toward the front side of the flange unit 210.

In this case, the method may further include forming at least two supports 230 spaced apart from each other by a preset, perhaps regular, distance in the circumferential direction on the outer circumference of the second mesh unit 220 and connected to the flange unit 210.

The first mesh unit 120 and the second mesh unit 220 may have meshes of different sizes to filter foreign materials. Any one of the first mesh unit 120 and the second mesh unit 220 may be made of metal and the other may be made of synthetic resin, or both may be made of the same material (e.g., either metal or synthetic resin).

While the description of the present invention has been made with reference to the example embodiments, various changes and modifications may be made without departing from the scope of the invention. The present invention is not limited to those embodiments. Therefore, the scope of the present invention should be defined by the appended claims rather than by the foregoing embodiments.

## Claims

1. A water valve for a washing machine, the water valve comprising:
a valve head;
a first filter unit operable for filtering foreign material in feed water in the washing machine; and
a second filter unit disposed at the rear side of the first filter unit relative to the direction of incoming feed water.

2. The water valve according to claim 1, wherein the first filter unit comprises:
a housing having a size that allows the housing to be inserted into the valve head; and
a first mesh unit installed in the housing and having a central portion protruding toward the direction of incoming feed water.

3. The water valve according to claim 2, wherein the first filter unit further comprises a grip over the first mesh unit and having both ends connected to the housing.

4. The water valve according to claim 2, wherein the second filter unit comprises:
a flange unit having a size that allows it to be inserted into the valve head and held in place by the housing; and
a second mesh unit disposed in the housing and operable for filtering foreign material in feed water that has passed through the first mesh unit, and extending from the flange unit and protruding toward the first mesh unit.

5. The water valve according to claim 4, further comprising at least two supports on the outer circumference of the second mesh unit and connected to the flange unit.

6. The water valve according to claim 4, wherein the first mesh unit and the second mesh unit have meshes of different sizes, wherein the first mesh unit and the second mesh unit are made of a material selected from the group of: metal; synthetic resin.

7. The water valve according to claim 6, wherein the first mesh unit is a product that is separate from the housing, and the second mesh unit is molded and integrated with the flange unit.

8. A washing machine comprising the water valve of claim 1.

9. A method of manufacturing a water valve for a washing machine, the method comprising:
manufacturing a first filter unit operable for filtering foreign material in feed water in the washing machine;
manufacturing a second filter unit operable for filtering the foreign material that passed through the first filter unit; and
installing the first filter unit and the second filter unit in a valve head of a water valve such that the first filter unit is positioned in front of the second filter unit relative to the direction of incoming feed water.

10. The method according to claim 9, wherein said manufacturing a first filter unit comprises:
forming a housing in a size that allows the housing to be inserted into the valve head;
forming a first mesh unit that protrudes toward the incoming feed water; and
installing the first mesh unit in the housing.

11. The method according to claim 10, wherein said manufacturing a second filter unit comprises:
integrally molding the flange unit such that it can be inserted into the valve head and formed in a size that allows the flange unit to be held in place by the housing with the second mesh unit protruding toward the first filter unit.

12. The method of manufacturing according to claim 11, further comprising:
forming at least two supports on the outer circumference of the second mesh unit and connected to the flange unit.

13. The method according to claim 11, wherein the first mesh unit and the second mesh unit have meshes of different sizes, wherein the first mesh unit and the second mesh unit are made of a material selected from the group consisting of: metal; synthetic resin.
